# EUROPEAN PATENT APPLICATION

(11) **EP 1 274 262 A1**
(43) Date of publication of application: **08.01.2003**
(21) Application number: 01305775.7
(22) Date of filing: 04.07.2001
(51) Int. Cl.: H04Q 7/22

(54) **Event triggered message transmission over a cellular communication network**

(71) Applicant: Nokia Corporation, 02150 Espoo (FI)
(72) Inventor: Sivakumar, T. V. L. N., Adachi-ku, Tokyo (JP)
(74) Representative: Slingsby, Philip Roy

(57) **Abstract**

A messaging system comprising: a portable communication device capable of wirelessly receiving text messages over a telephony network; a telephony device capable of communicating with the telephony network to send text messages to the portable communication device, and including a local signal receiver for receiving signals over a local wireless communication medium; and a monitoring unit comprising a monitoring device capable of detecting an event and configured to generate a paging initiation signal when the event is detected; and a short-range wireless signal transmitter responsive to the paging initiation signal to transmit a message triggering signal indicative of the event to the telephony device over the local wireless communication medium; the telephony device being arranged to transmit a text message indicative of the event to the portable communication device in response to receiving the message triggering signal from the triggering unit.

## Description

This invention relates to a system for providing a user with messages indicating an event via his portable communication device.

In a conventional paging or text messaging system (such as the SMS system in GSM) one user can prepare a message and send it or have it sent to another user's pager or mobile phone. This allows text data to be sent to the other user. This system is very useful but has drawbacks in many situations because of the need for the message to be prepared and sent by the first user. For example, a trader who needs to monitor investments but does not want to receive market data continuously (for instance when he is on holiday) may need to be notified via his portable communication device of certain large rises or falls in the market. In order to receive this information using a conventional paging system he must divulge to someone else the events that he wishes to be informed of so that they can send a message to him when needed. This might reveal to them his investment strategy, which could damage his position.

There is therefore a need for an improved system by means of which a user may be provided with messages indicating an event via his portable communication device.

According to the present invention there is provided a messaging system comprising: a portable communication device capable of wirelessly receiving text messages over a telephony network; a telephony device capable of communicating with the telephony network to send text messages to the portable communication device, and including a local signal receiver for receiving signals over a local wireless communication medium; and a monitoring unit comprising a monitoring device capable of detecting an event and configured to generate a paging initiation signal when the event is detected; and a short-range wireless signal transmitter responsive to the paging initiation signal to transmit a message triggering signal indicative of the event to the telephony device over the local wireless communication medium; the telephony device being arranged to transmit a text message indicative of the event to the portable communication device in response to receiving the message triggering signal from the triggering unit.

The portable communication device is preferably capable of radio communication with the telephony network. The portable communication device may be a cellular telephone/mobile telephone

The telephony device may be capable of wireless and/or wired communication with the telephony network.

The short-range signal is suitably a radio signal, for example using a low-power radio frequency protocol such as Bluetooth.

The monitoring unit suitably includes a store (preferably a non-volatile store) for storing a definition of one or more events. Preferably it can also store in association with each event definition information defining an address in the telephony network to which a message is to be sent on detection of that event (e.g. the address in that network of the portable communication device) and/or a definition of the text of a message that is to be sent on detection of that event. The definition of text may include one or more fields that are to be completed to include information derived from the monitoring device (e.g. on values of external factors determined by the device) or elsewhere (e.g. a real-time clock in the monitoring unit). The messaging unit preferably includes processing means for performing processing accordingly when such an event is detected.

The store is preferably user-configurable.

The portable communication device may be arranged to deliver the message in visible format, for example on a display screen of that device, and/or in audible format, for example via a loudspeaker of that device.

The present invention will now be described by way of example with reference to the accompanying drawing, in which:

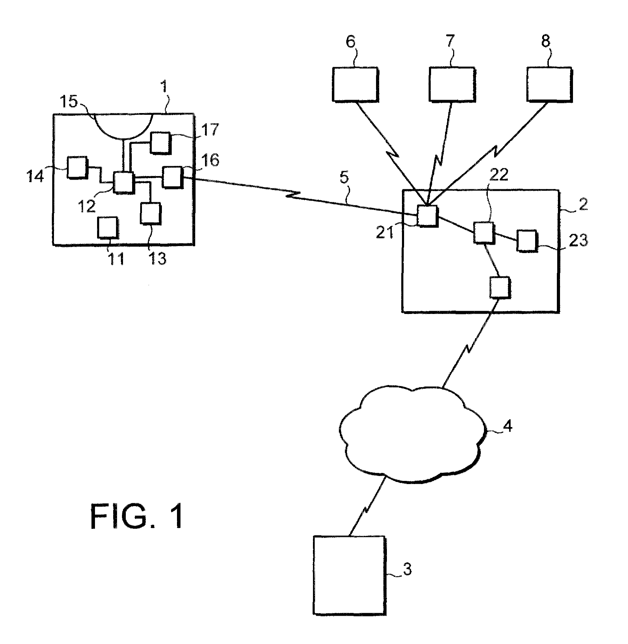

figure 1 shows a schematic diagram of a message paging system.

The system of figure 1 comprises three principal components: a monitoring unit 1, a telephony unit 2 and a portable communication device 3. The monitoring unit is capable of monitoring for the occurrence of a predefined event, and of communicating with the telephony unit over a wireless link 5 by a low-power RF (radio frequency) system such as Bluetooth. The telephony unit 2 is capable of communication with a publicly accessible telephony system 4. The monitoring unit is configured to transmit a message triggering signal over the link 5 to the telephony unit 2. The telephony unit is configured to, in response to that signal, transmit a text message to the portable communication device to indicate the occurrence of the event.

In the system of figure 1 the monitoring unit 1 and the telephony unit 2 are separate, physically separated units, and the monitoring unit 1 is not capable of communication in the public telephony system 4. It is anticipated that in future many devices, including telephones, will be provided with the capability of low power RF communication, for example using Bluetooth, whereas devices such as telephony unit 2 that are intended for connection to a public telephony system will continue to have to meet rigorous standardisation and testing requirements that are not required of other devices. Therefore, the system of figure 1 provides significant advantages over an alternative embodiment in which the telephony unit 2, or a device that is connected physically rather than wirelessly to it, performs the monitoring task. In the system of figure 1 there is no need for standardisation of the monitoring device, allowing flexibility in its design. In the system of figure 1 there is no need for hard-wiring of the monitoring device to the telephony device, which allows for convenience in installing the system and makes it especially suitable for domestic use. Furthermore, in the system of figure 1 the telephony unit 2 can serve with a single connection to the telephony system other monitoring units 6 to 8 that are monitoring for other events at different locations.

The system of figure 1 will now be described in more detail.

The monitoring unit 1 comprises a battery power source 11, a central processor 12, a non-volatile memory 13, a program memory 14, a monitoring device 15, a low-power RF communication unit 16, and a keypad 17. The battery 11 provides power for the unit. The central processor 12 includes on-board RAM as a temporary store and arranged to operate in accordance with programmed instructions stored in program memory 14. A user is able to communicate with the processor by means of keypad 17. The monitoring device is capable of monitoring circumstances external to the monitoring unit and reporting those circumstances to the processing unit. The processing unit is connected to the RF communication unit so as to be able to cause the RF communication unit to transmit signals to the telephony unit 2.

In operation the user configures the monitoring unit 1 by means of keypad 17 to define the conditions under which he wishes to be informed, the address to which any informing message is to be sent (for example the identity of his portable communication device 3) and the content of the message that he wishes to receive. The content of the message may include fixed text and updateable fields that can be completed by the processing unit 12 when the message is to be sent so as to include parameters such as the time of the message and the value(s) of information received from the monitoring unit. This data is stored in the non-volatile memory 13. More than one event and associated message settings may be defined and stored. Then the monitoring unit is left to perform its monitoring task. The monitoring device continuously (whether permanently or periodically) monitors the circumstances available to it and passes the information it detects to the processing unit 12. The processing unit 12 compares the detected information with the events that it has been configured to detect. If such an event is detected it forms the corresponding message as configured by the user and transmits it to the telephony device 2 as a message triggering signal. The message triggering signal includes the address of the intended recipient portable communication device 3 and is of a form such that it will be interpreted by the telephony device 2 as an instruction to transmit a message towards that portable device 3.

The monitoring unit 1 could be pre-configured to be triggered by certain events, rather than being user configurable, in which case the keypad 17 could be omitted.

Non-limiting examples of the types of circumstances that could be monitored by the monitoring device and associated triggering events are as follows:
1. The monitoring device could be connected to a financial information feed and the monitoring unit could be configured to send a message in response to rises or falls of certain tradable units by a certain amount in a certain time, or by the buying or selling price of certain tradable units reaching a set threshold.
2. The monitoring device could be connected to a burglar alarm system, could monitor the status of the alarm system and be configured to send a message in response to triggering of the alarm.
3. The monitoring device could be connected to en e-mail system and could be configured to send a message in response to receiving an e-mail. Additional conditions could be configured so that, for example, a message is only sent if the e-mail has a certain subject field or is from a certain sender. A configurable field in the message could allow the subject or the entire content of the e-mail to be sent in the message.
4. The monitoring device could be connected to a household appliance such as an oven or washing machine and could be configured for message sending in dependence on the status of that appliance.

The telephony unit 2 is located in range of the low-power RF unit 16. The telephony unit 2 includes a low-power RF receiver 21, a central processor 22 operable to execute program code stored in program memory 23 and a telephony connectivity device 24 by means of which the telephony unit is connectable to the telephone network.

The low-power RF receiver is operable according to the same protocol used by the monitoring unit 1. On receiving a signal the low-power RF receiver passes the received data to the central processor 22 for processing. If the central processor 22 determines that the data represents a message triggering signal (for instance by means of a signal type specifier field in a header of the data) it forms a message for transmission to the portable device 3 in accordance with received data, for instance so that the text of the message is the same as that specified in the message triggering signal. The central processor 22 passes the message text together with the received recipient address to the telephony connectivity device 24 which sends a message with that text over the telephone network to the recipient address of the portable device 3.

The telephony connectivity device could provide connectivity to any network that supports the necessary messaging capability. The network could be a land-line telephone network or a wireless network such as a cellular telephone network. In the case of a cellular telephone network the telephony connectivity device could include a coding/modulation device for forming a radio frequency signal encoding the message for transmission, an amplifier for amplifying that signal and an antenna connected to the output of the amplifier for transmitting the signal. The connectivity device could be operable according to any suitable network protocol, for example GSM, UMTS, PDC, PHS, CDMA 2000, IS-95 etc.

The portable device 3 could be a dedicated device specifically for operation to implement the present invention, but is more preferably a standard device such as a pager or mobile phone that can provide other communication functions than are described herein. The structure of such devices is well-known and is not shown in detail in figure 1.

If the portable device 3 is, for example, a mobile phone then it is preferred that the messages are sent according to an established messaging protocol, for example a mobile text messaging system such as SMS in GSM or a mobile-compatible e-mail system. Alternatively the text of the message could be carried in spoken audible form.

The present system could also be arranged so as to allow a low-power RF capable mobile phone to download mail to a low-power RF capable personal computer and to page, as described above, a mail receipt to another device capable of displaying the receipt, via the telephony unit 2.

Instead of a low-power RF link between the monitoring unit 1 and the telephony unit 2 another wireless communication means such as infra-red could be employed.

As illustrated in figure 1, since each monitoring unit 1 only needs to communicate intermittently with the telephony unit 2 a plurality of messaging units could use a single telephony unit for message sending. Thus, in a house monitoring units could be installed to monitor a range of factors and could each use the normal domestic phone system to make external connections for message sending.

The present invention may include any feature or combination of features disclosed herein either implicitly or explicitly or any generalisation thereof, irrespective of whether it relates to the presently claimed invention. In view of the foregoing description it will be evident to a person skilled in the art that various modifications may be made within the scope of the invention.

## Claims

1. A messaging system comprising:
a portable communication device capable of wirelessly receiving text messages over a telephony network;
a telephony device capable of communicating with the telephony network to send text messages to the portable communication device, and including a local signal receiver for receiving signals over a local wireless communication medium; and
a monitoring unit comprising a monitoring device capable of detecting an event and configured to generate a paging initiation signal when the event is detected; and a short-range wireless signal transmitter responsive to the paging initiation signal to transmit a message triggering signal indicative of the event to the telephony device over the local wireless communication medium;
the telephony device being arranged to transmit a text message indicative of the event to the portable communication device in response to receiving the message triggering signal from the triggering unit.

2. A messaging system as claimed in claim 1, wherein the portable communication device is capable of radio communication with the telephony network.

3. A messaging system as claimed in claim 1 or 2, wherein the telephony device is capable of wireless communication with the telephony network.

4. A messaging system as claimed in claim 1 or 2, wherein the telephony device is capable of wired communication with the telephony network.

5. A messaging system as claimed in any preceding claim, wherein the short-range wireless signal transmitter is a radio transmitter.

6. A messaging system as claimed in claim 5, wherein the short-range wireless signal transmitter is operable according to a low-power radio frequency protocol.

7. A messaging system as claimed in claim 6, wherein the protocol is Bluetooth.

8. A messaging system as claimed in any preceding claim, wherein the monitoring unit includes a store for storing a definition of the event, a processing device for comparing the output of the monitoring device with the definition of the event to determine when an event is detected.

9. A messaging system as claimed in claim 8, wherein the store is user-configurable.

10. A messaging system as claimed in claim 9, wherein the monitoring unit includes a user input device whereby a definition of the event may be stored by a user in the store.

11. A messaging system as claimed in any of claims 8 to 10, wherein the store is capable of storing an address of the portable communication device in the telephony network, the monitoring unit is configured to include an indication of the address in the message triggering signal and the telephony device is configured to direct the message sent in response to that signal to the indicated address.

12. A messaging system as claimed in any of claims 8 to 11, wherein the store is capable of storing a message definition, the monitoring unit is configured to form a text according to the message definition and include an indication of that text in the message triggering signal and the telephony device is configured to form the message in accordance with that indication.

13. A messaging system as claimed in claim 12, wherein the monitoring unit is capable of interpreting data in the message definition as requiring the insertion into the text of data derived from the monitoring device, and is configured to insert into the text data derived from the monitoring device.

14. A messaging system as claimed in any preceding claim, wherein the portable communication device is arranged to deliver the message in visible format.

15. A messaging system as claimed in any preceding claim, wherein the portable communication device is arranged to deliver the message in audible format.

16. A messaging system substantially as herein described with reference to the accompanying drawing.
